# EUROPÄISCHE PATENTSCHRIFT

(11) **EP 2 018 283 B1**
(45) Veröffentlichungstag und Bekanntmachung des Hinweises auf die Patenterteilung: **19.06.2013**
(21) Anmeldenummer: 07724745.0
(22) Anmeldetag: 30.04.2007
(51) Int. Cl.: B60H 1/00

(54) **VERFAHREN ZUM BETRIEB EINER KRAFTFAHRZEUG-KLIMAANLAGE**
METHOD FOR OPERATING A MOTOR VEHICLE AIR CONDITIONING SYSTEM
PROCÉDÉ DE FONCTIONNEMENT D'UN CLIMATISEUR DE VÉHICULE AUTOMOBILE

(30) Priorität: 05.05.2006 DE 102006021291
(43) Veröffentlichungstag der Anmeldung: 28.01.2009
(73) Patentinhaber: Behr GmbH & Co. KG, 70469 Stuttgart (DE)
(72) Erfinder: BARUSCHKE, Wilhelm, 73117 Wangen (DE); LOCHMAHR, Karl, 71665 Vaihingen/Enz (DE); MANSKI, Ralf, 70197 Stuttgart (DE); PITZ, Eric, 70199 Stuttgart (DE); STRAUSS, Thomas, 73274 Notzingen (DE)
(74) Vertreter: Grauel, Andreas
(86) Internationale Anmeldenummer: PCT/EP2007/003818
(87) Internationale Veröffentlichungsnummer: WO 2007/128455

(56) Entgegenhaltungen:
- EP-A- 1 609 638
- EP-A2- 1 314 590
- DE-A1- 10 308 254

## Beschreibung

Die Erfindung betrifft ein Verfahren zum Betrieb einer Kraftfahrzeug-Klimaanlage gemäß dem Oberbegriff des Anspruches 1.

Zur Klimatisierung eines Kraftfahrzeug-Innenraums mittels einer Klimaanlage ist sowohl bei fahrendem als auch bei stehendem Kraftfahrzeug ein Antrieb des Kompressors erforderlich, der Teil des Kältemittel-Kreislaufs der Klimaanlage ist. Üblicherweise wird der Kompressor vom Kraftfahrzeug-Motor angetrieben. Für einen Idle-stop-Betrieb, d.h. einen kurzfristigen Stopp des Motors, sind Klimaanlagen mit einem Kältespeicher bekannt, welcher die Kühlleistung über eine gewisse Zeit aufrecht erhält.

Aus der DE 103 43 238 A1 ist ein Verfahren zum Betreiben einer Kraftfahrzeug-Klimaanlage bekannt, wobei die Leistungsregelung des Kompressors derart erfolgt, dass im Schiebebetrieb des Kraftfahrzeugs, also beispielsweise bei einer Talfahrt, bei welcher zum Bremsen der Motor verwendet wird, eine niedrigere Verdampfertemperatur eines Verdampfers des Kältemittelkreislaufs der Klimaanlage als im Lastbetrieb eingestellt wird. Dadurch ist es möglich, die gespeicherte Kältekapazität unter Last, also bspw. bei Bergfahrten, energiesparend wieder abzurufen. Durch eine entsprechende Regelung ist ein energiesparender Betrieb der Klimaanlage möglich. Hierbei kann im Schiebebetrieb des Fahrzeugs die Verdampfertemperatur zumindest zeitweise auf weniger als 0°C eingestellt werden, wodurch sich durch gefrorene Luftfeuchtigkeit ein Eisansatz am Verdampfer bildet, der als zusätzlicher Energiespeicher nutzbar ist. Um ein zu starkes Vereisen zu vermeiden, sind die Betriebsphasen, in denen der Kältemittelkreislauf der Klimaanlage mit Verdampfertemperaturen unter 0°C betrieben wird, begrenzt.

Aus der DE 102 47 262 A1 ist ferner ein Verfahren zur Verdampfungstemperaturregelung bei einer Kraftfahrzeug-Klimaanlage bekannt, wobei die Klimaanlage einen Latentkältespeicher aufweist. Hierbei wird die Verdampfungstemperatur des Kältemittels im Verdampfer bedarfsabhängig auf einen Wert eingestellt, der zwischen einer Minimaltemperatur und einer unterhalb einer Phasenübergangstemperatur des Latentmediums liegenden Maximaltemperatur liegt.

Aus der EP 1 609 638 A2, der nächstliegender Stand der Technik darstellt, ist ein Verfahren zum Betreiben einer Klimatisierungseinrichtung für Fahrzeuge bekannt, wobei während einer Unterbrechung des Betriebs der Brennkraftmaschine ein Kühlen des Fahrzeuginnenraums unter Ausnutzung der in einem Kältespeicher gespeicherten Energie erfolgen kann.

Es ist Aufgabe der Erfindung, ein verbessertes Verfahren zum Betrieb einer Kraftfahrzeug-Klimaanlage zur Verfügung zu stellen.

Diese Aufgabe wird gelöst durch ein Verfahren mit den Merkmalen des Anspruchs 1. Vorteilhafte Ausgestaltungen sind Gegenstand der Unteransprüche.

Erfindungsgemäß ist ein Verfahren zum Betrieb einer Kraftfahrzeug-Klimaanlage vorgesehen, wobei die Klimaanlage einen Kältemittelkreislauf, in welchem mindestens ein Kompressor, mindestens ein Kondensator und mindestens ein Verdampfer angeordnet ist, aufweist, und zumindest ein Teilbereich des Verdampfers als Speicherverdampfer mit einem Kältespeicher ausgebildet ist, in welchem ein Latentmedium angeordnet ist. Hierbei wird zur erfindungsgemäßen Beladung des Kältespeichers die Temperatur des Kältemittels im Speicherverdampfer auf eine Temperatur unterhalb der Gefriertemperatur des Latentmediums abgesenkt und die Temperatur des Kältemittels im Speicherverdampfer nach einer Zeitspanne wieder erhöht wird, wobei die erhöhte Temperatur über der Gefriertemperatur (insbesondere der von Wasser unter Normalbedingungen) und unter der Schmelztemperatur des Latentmediums liegt. Das Beladen mit dieser Temperaturabfolge erfolgt vorzugsweise im Schiebebetrieb des Kraftfahrzeugs, bei dem überschüssige Leistung vorhanden ist, die auf diese Weise genutzt werden kann. Gegebenenfalls kann eine entsprechende Beladung jedoch auch beim Normalbetrieb des Kraftfahrzeugs erfolgen. Die Temperaturerhöhung auf eine Temperatur unterhalb der Schmelztemperatur des Latentmediums reicht aus, um das Latentmedium in seinem gefrorenen Zustand zu halten, so dass bei Bedarf die gespeicherte Kälte unter Durchlaufen eines Phasenwechsels abgegeben und dadurch die Kühlleistung der Klimaanlage zumindest kurzzeitig sichergestellt werden kann. Um die Temperatur im Fahrzeuginnenraum bei einem Kühlbetrieb, während dem die Temperatur des Kältemittels im Speicherverdampfer auf eine Temperatur unterhalb der Gefriertemperatur des Latentmediums abgesenkt wird, konstant zu halten, wird dem Kaltluftstrom etwas Warmluft, d.h. Luft, die den Heizer durchströmt, beigemischt, so dass auch in diesem Betriebszustand der Komfort erhalten bleibt.

Die Zeitspanne für das Beladen des Kältespeichers beträgt vorzugsweise 30 bis 180 Sekunden, insbesondere bevorzugt 40 bis 90 Sekunden, und ganz besonders bevorzugt maximal 60 Sekunden. Innerhalb dieser Zeit gefriert das Latentmedium bei normaler Ausgestaltung der Kältespeicher durch, so dass eine weitere Kühlung keine wesentliche Verbesserung des Ladezustands der Kältespeicher bewirken würde.

Dabei hängt erfindungsgmäß die Zeitspanne für das Beladen des Kältespeichers von der Lufteintrittstemperatur, der den Verdampfer durchströmenden Luftmenge und/oder der Luftfeuchte ab. Bei großen Luftmengen, wie auch bei großer Luftfeuchte und/oder hohen Lufteintrittstemperatur dauert das Einfrieren des Latentmediums länger als bei geringer Luftmenge, geringer Luftfeuchte und/oder geringen Lufteintrittstemperatur.

Die erhöhte Temperatur liegt vorzugsweise 0,5 bis 1,5K, insbesondere bevorzugt 0,9 bis 1,1 K und ganz besonders bevorzugt ca. 1K unter der Schmelztemperatur des Latentmediums.

Die Regelung des Kompressors erfolgt vorzugsweise derart, dass im Schiebebetrieb des Kraftfahrzeugs die Verdampfertemperatur niedriger als im Lastbetrieb eingestellt wird.

Bevorzugt wird, um eine ausreichende Klimatisierung im Fahrzeuginnenraum sicherzustellen, der Kompressor im Falle eines Idle-Stop Betriebs eingeschaltet, sobald die Temperatur der Luft nach dem Speicherverdampfer bei einem Motorstopp eine vorgegebene obere Grenztemperatur, die im Bereich von 9 bis 15°C, insbesondere 10 bis 12°C, ganz besonders bevorzugt bei 11°C, liegt, überschreitet, und der Kompressor wird - sofern keine Änderung des Betriebszustands des Kraftfahrzeugs erfolgt - betrieben, bis die Temperatur der Luft nach dem Speicherverdampfer eine vorgegebene untere Grenztemperatur erreicht, insbesondere auf 1 bis 5°C, insbesondere 2°C abgesenkt ist.

Besonders bevorzugt wird im Falle einer Beschleunigung des Kraftfahrzeugs, insbesondere bei Beschleunigungen, die bereits bei relativ großer Fahrtgeschwindigkeit erfolgen, wie bspw. bei Fahrtgeschwindigkeiten von über 50 km/h, die gespeicherte Kälte des Speicherverdampfers bei einem Kühlbetrieb abgegeben, d.h. es erfolgt bei einem derartigen Betrieb des Kraftfahrzeugs auch kein Beladen des Speicherverdampfers und im Wesentlichen die gesamte Leistung des Motors steht für die Beschleunigung zur Verfügung.

Zur Leistungsregelung des Kompressors kann vorzugsweise dessen Hubvolumen variiert werden, jedoch sind auch beliebige andere Maßnahmen zur Leistungsregelung möglich.

Im Folgenden wird die Erfindung anhand eines Ausführungsbeispiels unter Bezugnahme auf die beiliegende Zeichnung näher erläutert. Hierbei zeigen
- Fig. 1: eine schematische Darstellung einer Klimaanlage gemäß dem ersten Ausführungsbeispiel,
- Fig. 2: eine schematische Darstellung einer Klimaanlage gemäß dem zweiten Ausführungsbeispiel,
- Fig. 3: eine schematische Darstellung einer Klimaanlage gemäß dem dritten Ausführungsbeispiel,
- Fig. 4: ein Funktionsdiagramm der Lufttemperatur nach dem Speicherverdampfer über der Zeit für eine Speicherverdampfer-Beladung,
- Fig. 5: ein Funktionsdiagramm der Ausblastemperatur des Speicherverdampfers über der Zeit, und
- Fig. 6: ein Funktionsdiagramm der Zeit über der Lufteintrittstemperatur in den Speicherverdampfer mit Darstellung der Luftmenge/Luftfeuchte für eine Speicherverdampfer-Beladung.

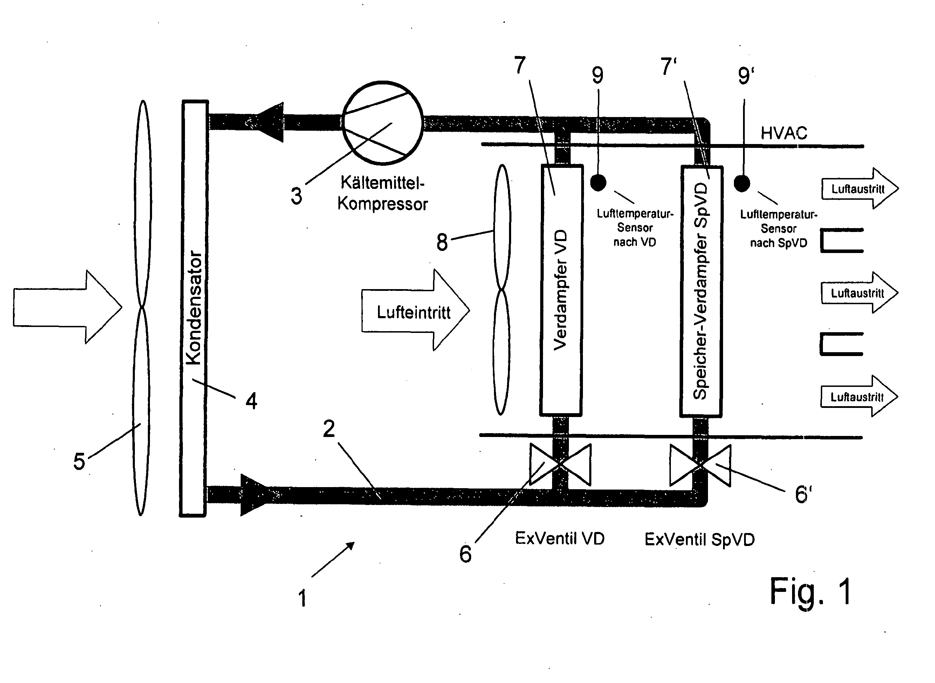

Eine Kraftfahrzeug-Klimaanlage 1 gemäß dem ersten Ausführungsbeispiel weist einen im Prinzip herkömmlichen Aufbau auf, wie er ein Fig. 1 dargestellt ist. Ein Kältemittel, vorliegend R134a, wird in einem Kältemittelkreislauf 2 mit Hilfe eines Kältemittelkompressors 3 umgewälzt, wobei das heiße, verdichtete Kältemittel zuerst zu einem Kondensator 4 gelangt, in welchem es mittels von einem Gebläse 5 angesaugter Umgebungsluft, die den Kondensator 4 durchströmt, abgekühlt wird. Anschließend teilt sich der Kältemittelkreislauf 2 in zwei parallele Zweige auf, wobei in einem der Zweige ein Expansionsventil 6 und demselben nachfolgend angeordnet ein Verdampfer 7 und im anderen Zweig ein zweites Expansionsventil 6', im Folgenden auch als Speicherverdampfer-Expansionsventil bezeichnet, und ein Speicherverdampfer 7' angeordnet sind. Nach dem Verdampfer 7 bzw. dem Speicherverdampfer 7' und vor dem Kältemittelkompressor 3 vereinigen sich die beiden Zweige wieder. Ein zweites Gebläse 8 saugt zu temperierende Luft aus der Umgebung und/oder dem Fahrzeuginnenraum an, welche durch den Verdampfer 7 und direkt anschließend durch den Speicherverdampfer 7' geführt wird, in welchen die Luft abgekühlt wird. Über in der Zeichnung angedeutete Luftkanäle gelangt die temperierte Luft in den Fahrzeuginnenraum. Um den Betrieb der Klimaanlage zu regeln, ist nach dem Verdampfer 7, wie auch nach dem Speicherverdampfer 7' jeweils ein Lufttemperatur-Sensor 9 bzw. 9' angeordnet, welche die entsprechenden aktuellen Lufttemperaturen ermitteln und die Messwerte an die Regelung weiterleiten.

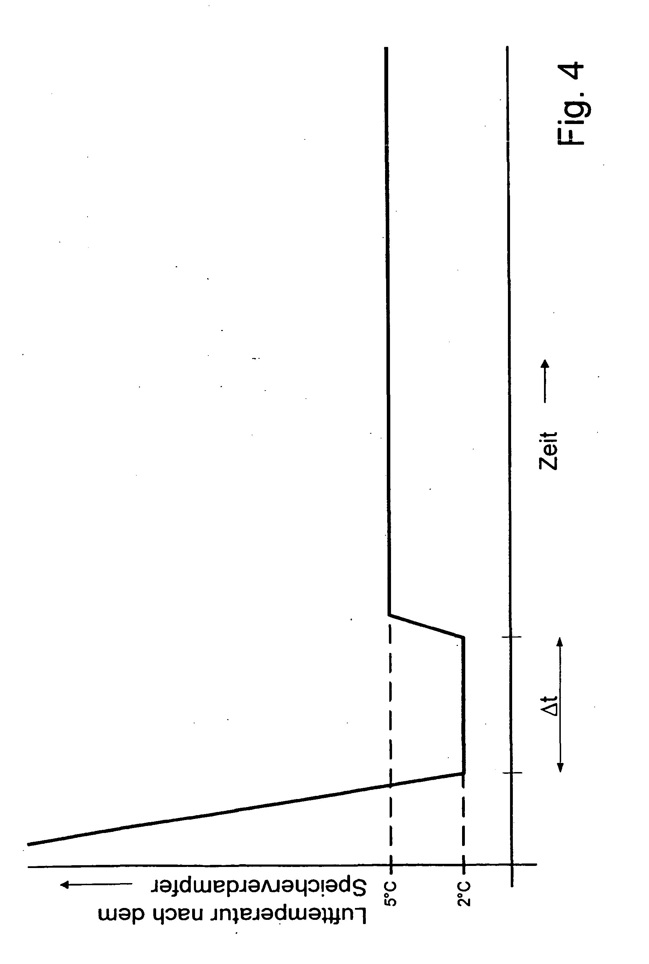

Das Beladen der Kältespeichers erfolgt vorliegend größtenteils energiesparend im Schiebebetrieb des Kraftfahrzeugs. In Fig. 4 ist ein Funktionsdiagramm einer erfindungsgemäßen, energiesparenden Beladung des Speicherverdampfers 7' dargestellt. Hierbei wird das in dem oder den Kältespeicherelementen, die im Speicherverdampfer 7' angeordnet sind, enthaltene Latentmedium bei günstigen Betriebsbedingungen, beispielsweise bei einem Schiebebetrieb, also z.B. bei einer Talfahrt, eingefroren. Die hierfür erforderliche Temperatur hängt vom Latentmedium ab, wobei gemäß dem vorliegenden Ausführungsbeispiel das Latentmedium bei einer Lufttemperatur nach dem Speicherverdampfer 7' von 2°C gefriert.

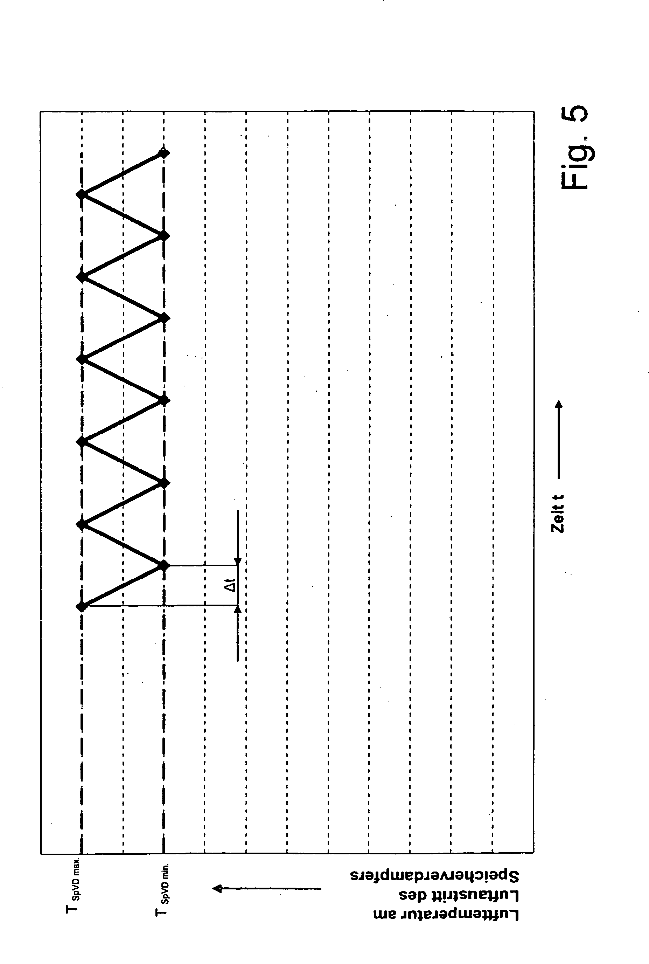

In Abhängigkeit der Randbedingungen, d.h. von der Lufteintrittstemperatur in den Speicherverdampfer 7', der Luftmenge und der Lufteintrittsfeuchte (siehe Funktionsdiagramm von Fig. 5) erfolgt nach dem Verstreichen einer Zeitspanne Δt, welche ein ausreichendes Gefrieren des Latentmediums sicherstellt, eine Anhebung der Lufttemperatur nach dem Speicherverdampfer 7' auf 5°C, was ca. 1 K unter dem Schmelzpunkt des gemäß dem vorliegenden Ausführungsbeispiel gewählten Latentmediums liegt, so dass bei energiesparenden Bedingungen der Kältespeichereffekt aufrecht erhalten wird. Im Belastungsfall, also beispielsweise bei einer Bergfahrt, ist die Temperatur nach dem Speicherverdampfer 7' derart geregelt, dass auch in diesem Fall die Temperatur von 5°C nicht überschritten wird, um eine permanente Verfügbarkeit der gespeicherten Kälteleistung für einen möglichen Idle-Stopp-Betrieb zu gewährleisten. Die Zeitspanne Δt beträgt - bei Betriebsbedingungen, wie sie in Mitteleuropa vorkommen - üblicherweise zwischen 30 und 180 Sekunden, vorzugsweise zwischen 40 und 90 Sekunden.

Die Regelung des Kältemittelkreislaufs 2 berücksichtigt ferner eine herkömmliche Regelung des Verdampfers 7 so dass die Lufttemperatur nach dem Verdampfer 7, wie auch die Lufttemperatur nach dem Speicherverdampfer 7' berücksichtigt werden, um die gewünschte Solltemperatur im Fahrzeuginnenraum zur Verfügung stellen bzw. konstant halten zu können.

Um eine möglichst energiesparende Beladung des Speicherverdampfers 7' zu ermöglichen, erfolgt die Beladung des Speicherverdampfers 7' in Fahrsituationen, bei denen kein Mehrverbrauch an Kraftstoff erforderlich ist, also beispielsweise bei einem Schiebebetrieb bei Talfahrten oder bei einem Schiebebetrieb im Rahmen fahrtypischer Lastwechsel.

Bei Fahrgeschwindigkeiten von über 60 km/h erfolgt eine herkömmliche, gleitende Regelung der Klimaanlage 1 in Abhängigkeit von der Lufttemperatur nach dem Speicherverdampfer 7', der in Luftströmungsrichtung hinter dem Verdampfer 7 angeordnet ist. Das Beladen des Speicherverdampfers 7' erfolgt auf die zuvor beschriebene Weise bedarfsgerecht während der Zeiten, in denen ein Schiebebetrieb vorliegt.

Wenn keine energiesparende Beladung des Speicherverdampfers 7' möglich ist und die Fahrgeschwindigkeit unter 60 km/h fällt, erfolgt bei Bedarf eine Beladung des Speicherverdampfers 7' bei vorliegend 2°C. Auch in diesem Fall erfolgt nach erfolgter Beladung eine Anhebung der Lufttemperatur nach dem Speicherverdampfer 7' auf 5°C.

Die Grenzfahrgeschwindigkeit kann jedoch auch anders gewählt werden, jedoch liegt sie vorzugsweise im Bereich von 60 km/h +/- 20 km/h, insbesondere bevorzugt zwischen 50 und 70 km/h.

Um Belastungsspitzen auszugleichen, kann in Lastsituationen, in denen die Regelung die Kompressorleistung verringert oder gar den Kompressor ganz abschaltet, beispielsweise beim Anfahren, bei starken Steigungen oder bei einem Kickdown, der Komfort im Fahrzeuginnenraum durch die gespeicherte Kälte des Kältespeichers aufrecht erhalten werden, so dass Energieverbrauchsspitzen ohne Komforteinbußen abgemindert werden können.

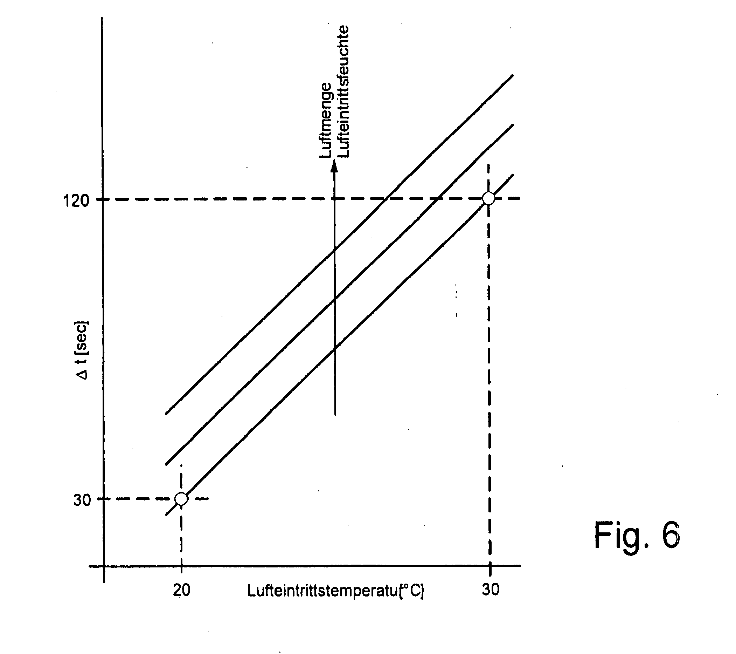

Ein relativ energiesparender Betrieb der Klimaanlage im Falle eines Idle-Stopp-Betriebs erfolgt zudem dadurch, dass - wenn bei einem Stopp die maximale Temperatur nach dem Speicherverdampfer 7' (in Fig. 6 als T_{SpVD max.} bezeichnet) von vorliegend 11°C überschritten wird, wodurch der Komfort im Fahrzeuginnenraum nicht mehr gewährleistet werden kann, der Kompressor wieder eingeschaltet und - sofern keine Änderung des Betriebszustands des Kraftfahrzeugs erfolgt - betrieben wird, bis die Temperatur nach dem Speicherverdampfer 7' (in Fig. 6 als T_{SpVD min.} bezeichnet) 9°C beträgt. Somit ergibt sich - sofern keine Parameter ändern - ein Funktionsdiagramm, wie in Fig. 6 schematisch dargestellt. Dieser zyklische Betrieb verhindert einen starken Temperaturanstieg im Fahrzeuginnenraum, auch wenn der Speicherverdampfer 7' der ihn durchströmenden Luft keine Wärme entziehen kann.

Die Grenztemperaturen können jedoch auch variiert werden, wobei sie bevorzugt im Bereich von 9 bis 15°C im Falle das Einschalten des Kompressors auslösenden Temperatur liegt. Die untere, das Ausschalten des Kompressors auslösende Temperatur kann in einem Temperaturbereich von 2 bis 15°C liegen, abhängig vom Gefrierpunkt des verwendeten Latentmediums.

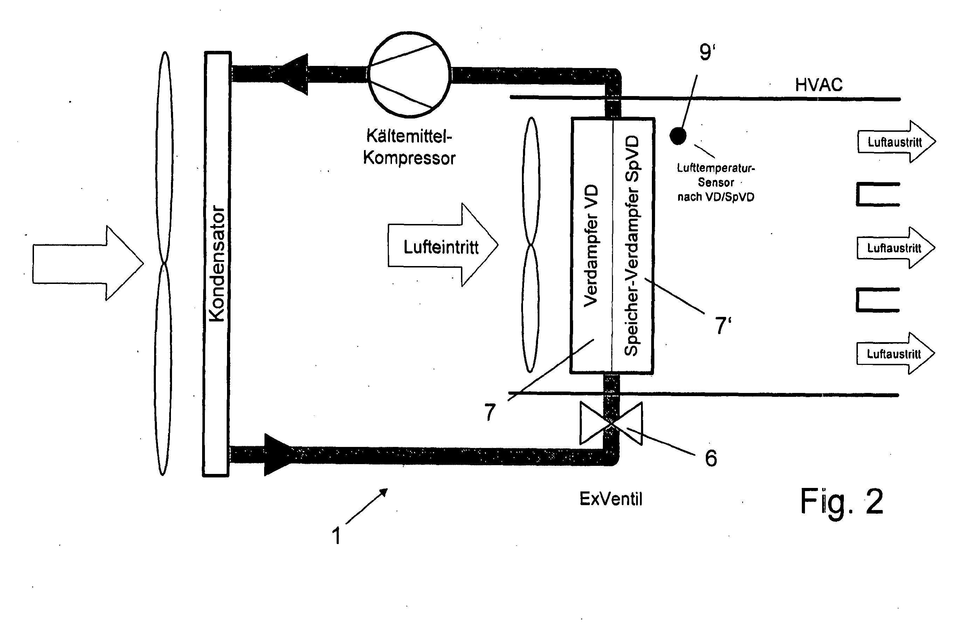

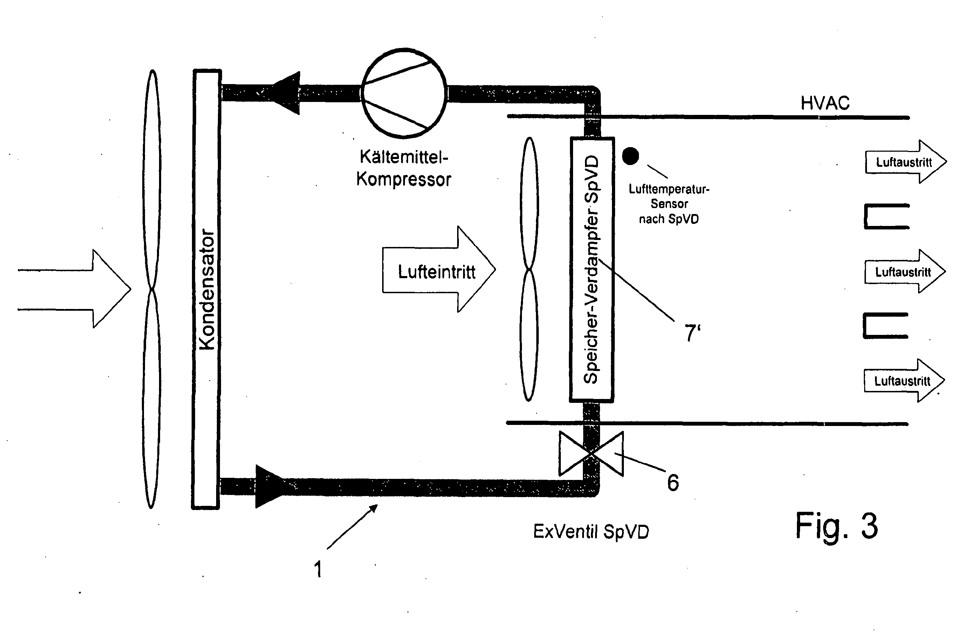

Eine entsprechende Regelung, wie zuvor beschrieben, kann auch bei den in den Figuren 2 und 3 dargestellten Kraftfahrzeug-Klimaanlagen 1 erfolgen.

Dabei sind im Falle der Klimaanlage von Fig. 2 der Verdampfer 7 und der Speicherverdampfer 7' integriert als ein kombinierter Verdampfer-Speicherverdampfer ausgebildet. Im vorliegenden Fall weist der Kältemittelkreislauf 1 keine parallelen Zweige auf, wodurch auch das zweite Expansionsventil 6' entfallen kann. Lediglich im Speicherverdampfer 7' (Speicherverdampferbereich), der luftabströmseitig des Verdampfers 7 (Verdampferbereich) angeordnet ist, sind Kältespeicherelemente vorgesehen, der Verdampferbereich ist auf herkömmliche Weise ohne Kältespeicherelemente ausgebildet. Hierbei kann die Kältemitteldurchleitung durch die beiden Bereiche parallel, teilweise parallel (d.h. mindestens ein Kältemittelteilstrom wird abgezweigt und durchströmt den Kältespeicherbereich, bevor er wieder dem restlichen Kältemittelstrom zugeführt wird) oder aber seriell erfolgen.

Im Falle der Klimaanlage von Fig. 3 ist nur ein Speicherverdampfer 7' mit einem vorgeschalteten Expansionsventil 6 vorgesehen, d.h. die Kältespeicherelemente sind im gesamten Verdampferbereich angeordnet. Eine Aufteilung des Kältemittelstroms ist hierbei nicht vorgesehen.

Neben dem vorstehend genannten Kältemittel R134a kann im Kältemittelkreislauf auch R744 oder ein anderes, geeignetes Kältemittel verwendet werden.

## Patentansprüche

1. Verfahren zum Betrieb einer Kraftfahrzeug-Klimaanlage mit einem Kältemittelkreislauf (2), in welchem mindestens ein Kompressor (3), mindestens ein Kondensator (4) und mindestens ein Verdampfer (7, 7') angeordnet ist, wobei zumindest ein Teilbereich des Verdampfers als Speicherverdampfer (7') mit einem Kältespeicher ausgebildet ist, in welchem ein Latentmedium angeordnet ist, **dadurch gekennzeichnet, dass** zur Beladung des Kältespeichers die Temperatur des Kältemittels im Speicherverdampfer (7') auf eine Temperatur unterhalt der Gefriertemperatur des Latentmediums abgesenkt und die Temperatur des Kältemittels im Speicherverdampfer (7') nach einer Zeitspanne (Δt) wieder erhöht wird, wobei die erhöhte Temperatur über der Gefriertemperatur und unter der Schmelztemperatur des Latentmediums liegt, wobei die Zeitspanne (Δt) in Abhängigkeit von der Lufteintrittstemperatur, der den Verdampfer (7, 7') durchströmenden Luftmenge und/oder der Luftfeuchte bestimmt wird.

2. Verfahren nach Anspruch 1, **dadurch gekennzeichnet, dass** die Zeitspanne (Δt) 30 bis 180 Sekunden, insbesondere 40 bis 90 Sekunden beträgt.

3. Verfahren nach einem der vorhergehenden Ansprüche, **dadurch gekennzeichnet, dass** die Zeitspanne (Δt) in Abhängigkeit von der für ein vollständiges Gefrieren des Latentmediums im Kältespeicher erforderlichen Zeit bestimmt wird.

4. Verfahren nach einem der vorhergehenden Ansprüche, **dadurch gekennzeichnet, dass** die erhöhte Temperatur 0,5 bis 1,5K, insbesondere 0,9 bis 1,1 K unter der Schmelztemperatur des Latentmediums liegt.

5. Verfahren nach einem der vorhergehenden Ansprüche, **dadurch gekennzeichnet, dass** die Regelung des Kompressors (3) derart erfolgt, dass im Schiebebetrieb des Kraftfahrzeugs die Verdampfertemperatur niedriger als im Lastbetrieb eingestellt wird.

6. Verfahren nach einem der vorhergehenden Ansprüche, **dadurch gekennzeichnet, dass** der Kompressor (3) im Falle eines Idle-Stop Betriebs eingeschaltet wird, sobald die Temperatur der Luft am nach dem Speicherverdampfer (7') bei einem Motorstopp eine vorgegebene obere Grenztemperatur (T_{SpVD max.}), die im Bereich von 9 bis 15°C, insbesondere 10 bis 12°C, besonders bevorzugt bei 11°C liegt, überschreitet, und der Kompressor (3) - sofern keine Änderung des Betriebszustands des Kraftfahrzeugs erfolgt - betrieben wird, bis die Temperatur der Luft am nach dem Speicherverdampfer (7') eine vorgegebene untere Grenztemperatur (T_{SpCD min.}) erreicht, die unter der oberen Grenztemperatur liegt.

7. Verfahren nach einem der vorhergehenden Ansprüche, **dadurch gekennzeichnet, dass** das Beladen des Speicherverdampfers (7') bei Fahrgeschwindigkeiten von unter einer Grenzfahrgeschwindigkeit, insbesondere von 60 km/h +/- 10 km/h, auch bei normalen Betriebsbedingungen und bei Fahrtgeschwindigkeiten über der Grenzfahrgeschwindigkeit ausschließlich im Schiebebetrieb erfolgt.

8. Verfahren nach einem der vorhergehenden Ansprüche, **dadurch gekennzeichnet, dass** im Falle einer Temperaturabsenkung zwecks Beladung des Speicherverdampfers, insbesondere im Schiebebetrieb des Kraftfahrzeugs, ein Teilluftstrom durch den beheizten Heizer geleitet und dem durch Luftstrom anschließend wieder beigemischt wird.

9. Verfahren nach einem der vorhergehenden Ansprüche, **dadurch gekennzeichnet, dass** im Falle einer Beschleunigung des Kraftfahrzeugs, insbesondere bei Fahrgeschwindigkeiten von über 50 km/h, die gespeicherte Kälte des Speicherverdampfers bei einem Kühlbetrieb abgegeben wird.

10. Verfahren nach einem der vorhergehenden Ansprüche, **dadurch gekennzeichnet, dass** zur Leistungsregelung des Kompressors (3) dessen Hubvolumen variiert wird.

11. Kraftfahrzeug-Klimaanlage mit einem Kältemittelkreislauf (2) mit mindestens einem Kompressor (3), einem Kondensator (4), einem Verdampfer (7), einem Expansionsorgan und einem Speicherverdampfer (7'), wobei der Speicherverdampfer (7') als Teibereich des Verdampfers (7) und mit einem Kältemittelspeicher ausgebildet ist, und mit mindestens einem Lufttemperatur-Sensor (9'), der im den Speicherverdampfer (7') durchströmenden Luftstrom angeordnet ist, **gekennzeichnet durch** eine Regelung des Kältemittelkreislaufs (2) zum Beladen des Speicherverdampfers (7') mittels eines Verfahrens nach einem der vorstehenden Ansprüche.

## Claims

1. A method for operating a motor vehicle air conditioning system, comprising a refrigerant circuit (2), in which at least one compressor (3), at least one condenser (4) and at least one evaporator (7, 7') are arranged, wherein at least one sub-region of the evaporator is designed as a storage evaporator (7'), which comprises a cooling battery and in which a latent medium is arranged, **characterized in that**, so as to charge the cooling battery, the temperature of the refrigerant in the storage evaporator (7') is lowered to a temperature below the freezing temperature of the latent medium and the temperature of the refrigerant in the storage evaporator (7') is increased again after a time period (Δt), wherein the increased temperature is above the freezing temperature and below the melting temperature of the latent medium, wherein the time period (Δt) is determined depending on the air inlet temperature, the air volume flowing through the evaporator (7, 7') and/or the humidity.

2. The method according to claim 1, **characterized in that** the time period (Δt) is 30 to 180 seconds, and more particularly 40 to 90 seconds.

3. A method according to any one of the preceding claims, **characterized in that** the time period (Δt) is determined depending on the time that is required for the latent medium in the cooling battery to completely freeze.

4. A method according to any one of the preceding claims, **characterized in that** the increased temperature is 0.5 to 1.5 K, and more particularly 0.9 to 1.1 K, below the melting temperature of the latent medium.

5. A method according to any one of the preceding claims, **characterized in that** the compressor (3) is controlled so that the evaporator temperature is lower during overrun operation of the motor vehicle than during load operation.

6. A method according to any one of the preceding claims, **characterized in that**, in the event of idle stop operation, the compressor (3) is activated as soon as the temperature of the air downstream of the storage evaporator (7') during an engine stop exceeds a predetermined upper temperature limit (T_{SpVD max.}), which ranges between 9 and 15°C, in particular between 10 and 12°C, and particularly preferably is 11°C, and the compressor (3) - provided no change occurs to the operating state of the vehicle - is operated until the temperature of the air downstream of the storage evaporator (7') reaches a predetermined lower temperature limit (T_{SpVD min.}), which is below the upper temperature limit.

7. A method according to any one of the preceding claims, **characterized in that**, at driving speeds below a limit driving speed, in particular 60 km/h +/- 10 km/h, under normal operating conditions and at driving speeds above the limit driving speed, the storage evaporator (7') is charged exclusively during overrun operation.

8. A method according to any one of the preceding claims, **characterized in that** a partial air flow is conducted through the heated heating unit and is then admixed again to the air flow in the event a temperature reduction occurs for the purpose of charging the storage evaporator, in particular during overrun operation of the motor vehicle.

9. A method according to any one of the preceding claims, **characterized in that** the stored cold energy of the storage evaporator is given off during cooling operation in the event the motor vehicle is accelerated, in particular at driving speeds above 50 km/h.

10. A method according to any one of the preceding claims, **characterized in that** the displacement of the compressor (3) is varied so as to control the power thereof.

11. A motor vehicle air conditioning system, comprising a refrigerant circuit (2) having at least one compressor (3), a condenser (4), an evaporator (7), an expansion valve and a storage evaporator (7'), wherein the storage evaporator (7') is designed as a sub-region of the evaporator (7) and comprises a refrigerant storage unit, and at least one air temperature sensor (9'), which is arranged in the air flow flowing through the storage evaporator (7'), **characterized by** control of the refrigerant circuit (2) so as to charge the storage evaporator (7') using a method according to any one of the preceding claims.

## Revendications

1. Procédé de fonctionnement d'un système de climatisation d'un véhicule automobile comprenant un circuit de fluide frigorigène (2) dans lequel sont disposés au moins un compresseur (3), au moins un condenseur (4) et au moins un évaporateur (7, 7'), où au moins une zone partielle de l'évaporateur est conçue comme un évaporateur accumulateur (7') comportant un accumulateur de froid dans lequel est disposé un milieu latent, **caractérisé en ce que**, pour la charge de l'accumulateur de froid, la température du fluide frigorigène contenu dans l'évaporateur accumulateur (7') est abaissée à une température inférieure à la température de congélation du milieu latent, et la température du fluide frigorigène contenu dans l'évaporateur accumulateur (7') est à nouveau augmentée après un laps de temps (Δt), où la température augmentée se situe au-dessus de la température de congélation et au-dessous de la température de fusion du milieu latent, où le laps de temps (Δt) est déterminé en fonction de la température d'entrée d'air, de la quantité d'air traversant l'évaporateur (7, 7') et/ou en fonction de l'humidité de l'air.

2. Procédé selon la revendication 1, **caractérisé en ce que** le laps de temps (Δt) est de 30 secondes à 180 secondes, en particulier de 40 secondes à 90 secondes.

3. Procédé selon l'une ou l'autre des revendications précédentes, **caractérisé en ce que** le laps de temps (Δt) est déterminé en fonction du temps nécessaire pour une congélation totale du milieu latent se trouvant dans l'accumulateur de froid.

4. Procédé selon l'une quelconque des revendications précédentes, **caractérisé en ce que** la température augmentée se situe de 0,5 K à 1,5 K, en particulier de 0,9 K à 1,1 K au-dessous de la température de fusion du milieu latent.

5. Procédé selon l'une quelconque des revendications précédentes, **caractérisé en ce que** la régulation du compresseur (3) se produit de manière telle, que la température de l'évaporateur, en régime de décélération du véhicule automobile, soit réglée en étant plus basse qu'en régime de charge.

6. Procédé selon l'une quelconque des revendications précédentes, **caractérisé en ce que** le compresseur (3) est mis en marche dans le cas d'un fonctionnement en mode arrêt du ralenti, dès que la température de l'air en aval de l'évaporateur accumulateur (7') dépasse, lors d'un arrêt du moteur, une température limite supérieure prédéfinie (T_{SpVD max.}) qui se situe dans la plage comprise entre 9°C et 15°C, en particulier entre 10°C et 12°C, de façon particulièrement préférée est à peu près de 11°C, et le compresseur (3), dans la mesure où il ne se produit aucune modification de l'état de fonctionnement du véhicule automobile, est actionné, jusqu'à ce que la température de l'air en aval de l'évaporateur accumulateur (7') atteigne une température limite inférieure prédéfinie (T_{SpVD min.}) qui se situe au-dessous de la température limite supérieure.

7. Procédé selon l'une quelconque des revendications précédentes, **caractérisé en ce que** la charge de l'évaporateur accumulateur (7'), à des vitesses de roulage inférieures à une vitesse de roulage limite, en particulier de 60 km/h +/- 10 km/h, également en cas de conditions normales de fonctionnement et à des vitesses de roulage supérieures à la vitesse de roulage limite, se produit exclusivement en régime de décélération.

8. Procédé selon l'une quelconque des revendications précédentes, **caractérisé en ce que**, dans le cas d'un abaissement de la température dans le but de procéder à la charge de l'évaporateur accumulateur, en particulier en régime de décélération du véhicule automobile, un flux d'air partiel est dirigé à travers le dispositif de chauffage chauffé, puis à nouveau mélangé au flux d'air.

9. Procédé selon l'une quelconque des revendications précédentes, **caractérisé en ce que**, dans le cas d'une accélération du véhicule automobile, en particulier à des vitesses de roulage supérieures à 50 km/h, le froid accumulé de l'évaporateur accumulateur est fourni lors d'un fonctionnement en mode refroidissement.

10. Procédé selon l'une quelconque des revendications précédentes, **caractérisé en ce que**, pour la régulation de puissance du compresseur (3), sa cylindrée est variable.

11. Système de climatisation d'un véhicule automobile comprenant un circuit de fluide frigorigène (2) comportant au moins un compresseur (3), un condenseur (4), un évaporateur (7), un détendeur et un évaporateur accumulateur (7'), où l'évaporateur accumulateur (7') est conçu comme une zone partielle de l'évaporateur (7) et comportant un accumulateur de froid, et comprenant au moins un capteur (9') de température de l'air, capteur qui est disposé dans le flux d'air traversant l'évaporateur accumulateur (7'), **caractérisé par** une régulation du circuit de fluide frigorigène (2) servant à charger l'évaporateur accumulateur (7') au moyen d'un procédé selon l'une quelconque des revendications précédentes.
